# EUROPEAN PATENT APPLICATION

(11) **EP 1 760 828 A1**
(43) Date of publication of application: **07.03.2007**
(21) Application number: 05018926.5
(22) Date of filing: 31.08.2005
(51) Int. Cl.: H01Q 1/52, H01Q 7/00, H01Q 1/22, G06K 19/077

(54) **Contactless integrated circuit device**

(71) Applicant: Incard SA, 1204 Geneva (CH)
(72) Inventor: Scarlatella, Michele, 80126 Napoli (IT)
(74) Representative: Ferrari, Barbara

(57) **Abstract**

Electronic device (30) comprising an integrated circuit (2) linked to a coil antenna (3) forming at least a spiral (11) having opposite ends connected to the integrated circuit and a plate support (4) for supporting said integrated circuit (2) and antenna (3), the plate support (4) is conductive and open ring shaped, wherein the internal circumference (16) of the ring is concentric to the spiral (11) and the openinig of the ring is obtained by a cut (10) of said support (4); the coil antenna (3) are fastened to and isolated from said plate support (4) through an insulating material, the cut (10) and the support (4) beeing filled by the same insulating material.

## Description

### Field of Application

This invention relates to a contactless integrated circuit device comprising an integrated circuit linked to a coil antenna forming at least a spiral having opposite ends connected to the integrated circuit and a plate support for supporting the integrated circuit and the coil antenna.

In particular this invention relates to a device of the type indicated above in which the integrated circuit is powered by inductive coupling through the coil antenna by means a read-write device used for receiving and transmitting a radio frequency from and toward the integrated circuit.

The invention, more in particular but not exclusively, is directed to a contactless integrated circuit device in which the integrated circuit and the coil antenna are laminated over or inside a non conductive plate support, for instance a PVC or plastic material.

Device of this kind are commonly defined contactless integrated circuit device.

### Prior Art

As is well known, an integrated circuit (hereinafter IC) is an electronic component designed to perform processing of digital data and memory functions. The IC is generally mounted over an frame, that is a physical support for the IC, realized in non conductive material, like PVC or plastic material.

In particular the IC is defined to be "contactless" when is driven by an external read-write device and without a direct path between the external read-write device and the IC.

More particularly this kind of IC is provided with a coil antenna forming at least a spiral, also mounted over the frame, generally in a wire-wound of copper and obtained by printing or electroplating a conductive film having opposite ends linked to the IC.

This kind of IC, known and hereinafter referred as "contactless IC", is not powered through a connection with galvanic elements but by inductive coupling it near by the external read-write device. Said device produces an energizing RF field which couples to the coil antenna linked to the IC, powering it and which is modulated for communication, as explained in the following description in more detail.
- The contactless IC is activated by the RF operating field of the read-write device;
- the contactless IC waits silently for a command from the read-write device;
- the read-write device transmits a command to the contactless IC;
- the contactless IC transmits a response to the read-write device.

So, the contactless IC is located in the proximity of the external read-write device and is powered by a process of electromagnetic induction from the read-write device and, further, the information is transmitted from the contactless IC to the read-write device by use of electromagnetic waves, as instance radio waves.

The RF field generated by the read-write device strictly complies with the standards specified by International Standard Organization in ISO/IEC 14443, ISO/IEC 14443A or ISO/IEC 15693. These standards specify physical characteristics of contactless IC, their transmission protocol and rules for applications and data elements. In particular, the contactless IC must operate between a minimum unmodulated operating field Hmin and a maximum unmodulated operating field Hmax.

Even if this type of contactless IC has advantages from various points of view, it also has known drawbacks which are particularly evident when it is necessary to use it in proximity of a conductive material. As a matter of fact the RF field generated by the read-write device and directed to the IC is disturbed by the presence of the conductive material.

More in particular, for some application it is necessary to mount the frame in close proximity of a conductive plate support, like mounting it on an aluminium substrate, for instance a licence plate. Due to Lent'z' law, the magnetic flux through the plate induces eddy currents within the metal which oppose the field responsible for their creation dumping the the magnetic field in the surface of metallic or conductive plate to such a degree that communication is no longer possible.

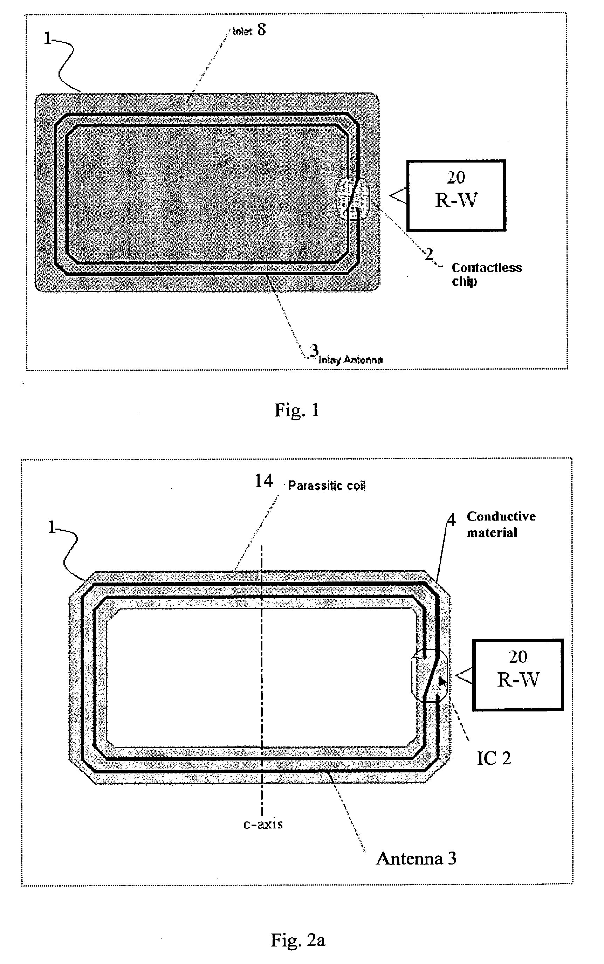

Figure 2a is a schematic representation showing the coupling of a conventional contactless IC 1, comprising a coil antenna 3 and an IC 2, to a generic conductive plate support 4 on which the contactless IC 1 is mounted. The area of conductive plate support 4, located underneath the coil antenna 3, creates a parasitic coil 14.

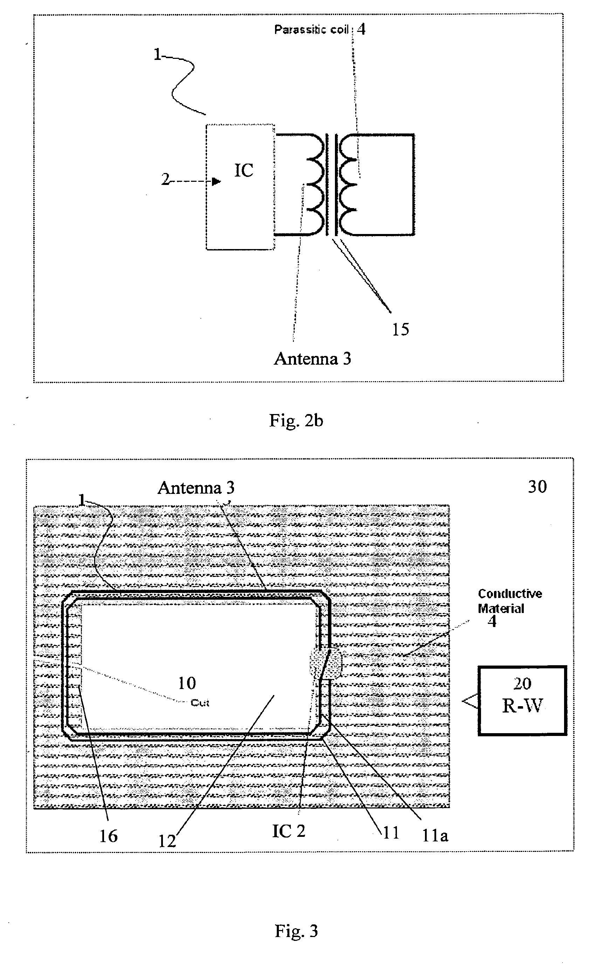

This parasitic coil 14 is tightly coupled to the coil antenna 3 so to create a coupled inductance circuit, that can be assimilated to a pseudo transformer, as shown in figure 2b. More in particular figure 2b is a schematic representation of the contactless IC 1 and the parasitic coil 14 shown in figure 2a, rotated left-side 90 degrees around a vertical c-axis and enlarged in proximity of the IC 2. The pseudo transformer, generated by coupling the parasitic coil 14 and the coil antenna 3, is indicated with numeral reference 15.

The inductance circuit of the pseudo transformer 15 is formed by the parasitic coil 14 and is shorted causing all the energy transferred from the read-write device 20 by magnetic flux variation, to be dissipated as heat in the conductive plate support 4. As a consequence, no energy is available to power the contactless IC 1, that does not work in this configuration.

The effect obtained by coupling the parasitic coil 14 and the coil antenna 3 is clearly described in "Fundamentals & Applications in Contactless Smart Cards and Identification, 2nd ed", RFID Handbook, ISBN: 0-470-84402-7, written by J.Wiley and stating the imposibility to fit the RFID tags directly onto a metallic surface.

To decouple magnetically the coil antenna 3 and the conductive plate support 4 it is possible to insert magnetic shielding materials, usually ferrite or Mumetal (copper and nickel alloy), between the coil antenna 3 and the conductive plate support 4. These materials have a very high permeability µ of the order of 10000 and a very effective shielding, even with a thickness of 100 µ.

Nevertheless, ferrite are usually fragile material, and the Mumetal alloy is a very expensive and very delicate material and its use is unthinkable for a wide range of application, above all when the frame is subject to solicitations or breaks, expecially when the cost of the Mumetal is very expensive compared to the cost of the entire contactless IC device. Furthermore, the presence of the magnetic shielding material changes the center frequency tuning of the antenna 13 and internal tuning capacitance; to use this solution, the contactless IC 1 must be specially manufactured, taking into account the final mouting configuration. This renders the contactless IC device unusable for a wide range of application, not only for techinical toughness but also because the standards ISO/IEC 14443, ISO/IEC 14443A or ISO/IEC 15693 can't be duly respected.

The problem underlying this invention is to provide a contactless IC device able to transmit RF signals between the read-write device and the IC even in presence of a conductive material, respecting the standards specified by International Standard Organization in ISO/IEC 14443, ISO/IEC 14443A or ISO/IEC 15693 and capable of overcoming, simply and economically, all the above-mentioned drawbacks connected to the known art.

### Summary of the invention

This problem is solved, according to the present invention, by an electronic device comprising an integrated circuit linked to a coil antenna forming at least a spiral having opposite ends connected to the integrated circuit and a plate support for supporting said integrated circuit and antenna characterized by the fact that said support is a conductive plate, open ring shaped wherein the internal circumference of the ring is concentric to said spiral and the openinig of the ring is obtained by a cut of said support.

The features and advantages of the invention will be apparent from the following description of an embodiment thereof, given by way of non-limitative example with reference to the accompanying drawings.

### Brief description of the drawings

Figure 1 is a representation of a contactless IC laminated inside an frame composed of non conductive material.
Figure 2a is a schematic representation of a contactless IC located on a parasitic coil.
Figure 2b is a schematic representation of the contactless IC and the parasitic coil of figure 2, rotated left-side around the vertical c-axis and enlarged in proximity of the IC.
Figure 3 is a schematic representation of the contactless IC device according to the present invention.

### Detailed Description

With reference to figure 3 is shown and is globally indicated with 30 a contactless Integrated Circuit device realized in accordance with the present invention. The device 30 comprises a contacless Integrated Circuit 1, including an Integrated Circuit 2 and a coil antenna 3, preferably in a wire-wound, forming at least a spiral 11 having opposite ends linked to the IC 2; the integrated circuit 2 and the coil antenna 3 are supported by a plate support 4.

A read-write device 20 may be used, in proximity of the device 30, to power it by inductive coupling through the coil antenna 3 and to estabilish a contacless communication in radio frequency between said read-write device 20 and said Integrated Circuit 2. As a preference this contactless communication is performed according to the standard specified by the International Standard Organization in ISO/IEC 14443, ISO/IEC 14443A or ISO/IEC 15693.

According to the present invention said plate support 4 is a conductive plate, open ring shaped wherein the internal circumference 16 of the ring is concentric to the spiral 11 and the openinig of the ring is obtained by a cut 10 of said support 4. The cut 10 is made by machine milling or punching, from the internal circumference 16 to the external border of said plate 4, creating a discontinuity element on the same border plate.

Advantageously, the cut 10 and the internal circumference 16 prevent the induction of the parasitic inductance circuit described above and represented by the pseudo transformer 15, generated by coupling the conductive plane support 4 with the coil antenna 3 and avoiding the shunt of the induced magnetic energy.

The conductive plane support 4 infact, with the open ring shape described above, couples with the antenna 3 without constituting a parasitic coil, thanks to the discontinuity element that break the pseudo transformer 15; this allows the read-write device 20 to transfer all the energy to the coil antenna 3, and consequently from the coil antenna to the IC, without dissipation on the conductive plate support 4 and without altering the tuning frequency of the contactless IC.

In particular the cut 10 and the internal circumference 16 are made without compromising the hardness of the conductive plate support 4, beeing the width of the cut 10 not significant respect the border size of the surface and beeing the internal circumference 16 dimensionable within it, so to allow all the application in which the conductive plate support 4 must constitute a tough base and a protection for the contactless IC.

The device 30 can be as instance used to include a contacless IC, containing matriculation data about a vehicle, arranged on a licence plate constituted by metallic plate support of the type described. The internal circumference, not relevant respect the licence plate surface, is filled with an insulating material, like a resin, fastening the contactless IC to the licence plate.

In this respect the conductive plate support 4 can also have light thickness because the insulating material insertion inside the cut 10 and the internal circumference 16 guarantees said support 4 to remain plane and rigid body, despite the discontinuity caused by the cut 10.

The manufacturing of this kind of conductive plane support 4 is very simple and economic, expecially through machine milling and punching, for carving out easily the cut 10 and the internal circumference 16, so to make possible the use of contactless IC associated to conductive material on a very large scale.

From the foregoing it will be appreciated that, although specific embodiments of the invention have been described herein for purposes of illustration, various modifications may be made without deviating from the spirit and scope of the invention. Accordingly, the invention is not limited except as by the appended claims.

Advantageusly, and according to another embodiment of the present invention, the device 30 described can be used for coupling a conductive plate support 4 with a contactless IC 1 already laminated inside a traditional frame 8, in PVC or in plastic material.

This allows to maintain compatibility with contactless IC 1 already produced and embedded inside traditional frame 8, as well to produce contactless IC 1, laminating it on insulating material, indipendently from their potential and future use near by a conductive plate support.

The contactless IC device 30 according to the present invention, advantageously deletes the parasitic effect obtained by coupling a coil antenna 3 with a conductive plane support 4 simply and economically, providing a device 30 usable for a wide range of application in which the contactless IC 1 is used in proximity of a conductive material 4 or when the same support of contactless IC 1 is a conductive material 4.

## Claims

1. Electronic device (30) comprising an integrated circuit (2) linked to a coil antenna (3) forming at least a spiral (11) having opposite ends connected to the integrated circuit and a plate support (4) for supporting said integrated circuit (2) and said antenna (3), **characterized by**:
- said support (4) is a conductive plate with a central aperture;
- said spiral (11) of said coil antenna (3) is around said central aperture;
- said conductive plate presenting a lateral thin cut (10) protuding toward said central aperture thus obtaining an open ring or "C" shape for said plate.

2. Device according to the claim 1 **characterized by** the fact that said integrated circuit (2) and said coil antenna (3) are fixed on and isolated from said plate support (4) through an insulating layer.

3. Device according to the claim 1 **characterized by** the fact that said cut (10) is filled by an insulating material thus maintaining the planar structure of the support plate.

4. Device according to the claim 1 **characterized by** the fact that said integrated circuit (2) and said antenna (3) are laminated inside a non conductive frame (8).

5. Device according to the claim 2 **characterized by** the fact that said frame is fixed on said plate support (4) through an insulating material.

6. Device according to the claim 1 **characterized by** the fact said central aperture is a squared window in said plate.

7. Device according to the claim 1 **characterized by** the fact said plate and said aperture forme substantially a passepartout frame structure.
